# EUROPÄISCHE PATENTSCHRIFT

(11) **EP 2 917 711 B1**
(45) Veröffentlichungstag und Bekanntmachung des Hinweises auf die Patenterteilung: **09.11.2016**
(21) Anmeldenummer: 13774631.9
(22) Anmeldetag: 27.09.2013
(51) Int. Cl.: G01K 1/08

(54) **TEMPERATURSENSORSYSTEM UND VERFAHREN ZUR HERSTELLUNG EINES TEMPERATURSENSORSYSTEMS**
TEMPERATURE SENSOR SYSTEM AND METHOD FOR PRODUCING A TEMPERATURE SENSOR SYSTEM
SYSTÈME CAPTEUR DE TEMPÉRATURE ET PROCEDE DE PRODUCTION D'UN SYSTÈME CAPTEUR DE TEMPÉRATURE

(30) Priorität: 12.11.2012 DE 102012110822
(43) Veröffentlichungstag der Anmeldung: 16.09.2015
(73) Patentinhaber: Epcos AG, 81669 München (DE)
(72) Erfinder: IHLE, Jan, A-8071 Grambach (AT); BARD, Oliver, 14612 Falkensee (DE); KLOIBER, Gerald, A-8073 Feldkirchen (AT)
(74) Vertreter: Epping - Hermann - Fischer
(86) Internationale Anmeldenummer: PCT/EP2013/070250
(87) Internationale Veröffentlichungsnummer: WO 2014/072124

(56) Entgegenhaltungen:
- EP-A1- 1 785 705
- EP-A2- 2 420 807

## Beschreibung

Die Messung von Temperaturen für die Überwachung und Regelung in unterschiedlichsten Anwendungen erfolgt beispielsweise mit keramischen Heißleiter-Thermistorelementen (NTC thermistor, "negative temperature coefficient thermistor"), Silizium-Temperatursensoren (zum Beispiel sogenannten KTY-Temperatursensoren), Platin-Temperatursensoren (PRTD, "platinum resistance temperature detector") oder Thermoelementen (TC, "Thermocouple").

Für eine leichte Montage in einer Anwendung, eine ausreichende mechanische Stabilität und zum Schutz des eigentlichen Temperatursensorelements gegen äußere Einflüsse sowie zur Vermeidung von Korrosion durch aggressive Medien erfolgt der Einbau in Gehäusen, die üblicherweise aus Kunststoffen, aus einfachen Metallstrukturen oder aus Kunststoff-Metall-Verbunden bestehen. Für den elektrischen Anschluss sind üblicherweise Steckkontakte und/oder Leitungszuführungen in den Gehäusen integriert. Geeignete Abdichtungen solcher Systeme erfolgen unter Verwendung von Dichtungen, Vergussmaterialien und/oder Klebstoffen.

Sensorsysteme mit Kunststoff- oder Polymergehäusen können jedoch nicht für die Messung von sehr hohen Temperaturen eingesetzt werden. Die maximalen Einsatztemperaturen solcher Systeme mit Kunststoff- oder Polymergehäusen sind auf cirka 200 °C bis 250 °C begrenzt. Hingegen haben die wesentlich temperaturstabileren Metalle den Nachteil, dass komplexe Gehäuseformen sehr schwer zu realisieren sind und somit meist die geometrischen Anforderungen für die Anwendung nicht erfüllt werden können. Weiterhin sind Sensorsysteme mit Metallgehäusen aufgrund von Korrosionserscheinungen nur begrenzt in besonders aggressiven Medien einsetzbar. Ein weiterer großer Nachteil der so aufgebauten Systeme ist deren verzögerte Ansprechzeit aufgrund zusätzlicher konstruktionsbedingter Wärmeübergänge und einer geringen Wärmeleitung der verwendeten Materialien.

Aus den Druckschriften EP 2 420 807 A2 und EP 1 785 705 A1 ist ein Sensorsystem mit einem Metallgehäuse bekannt.

In der Druckschrift JP 2010 032 237 A ist ein Sensorsystem mit einer Keramikhülse beschrieben.

Es ist eine zu lösende Aufgabe zumindest einiger Ausführungsformen ein Temperatursensorsystem anzugeben, das eine hohe Robustheit sowie eine geringe Ansprechzeit aufweist. Eine weitere Aufgabe zumindest einiger Ausführungsformen ist es, ein Verfahren zur Herstellung eines Temperatursensorsystems anzugeben.

Diese Aufgaben werden durch einen Gegenstand und ein Verfahren gemäß den unabhängigen Patentansprüchen gelöst. Vorteilhafte Ausführungsformen und Weiterbildungen der Gegenstände gehen weiterhin aus den abhängigen Patentansprüchen, der nachfolgenden Beschreibung und aus den Zeichnungen hervor.

Ein Temperatursensorsystem gemäß zumindest einer Ausführungsform weist ein erstes keramisches Gehäuseteil auf. Das erste keramische Gehäuseteil weist ein hülsenförmiges Unterteil mit einem ersten, eine erste Öffnung aufweisenden unteren Ende und einem zweiten, eine zweite Öffnung aufweisenden oberen Ende sowie ein mit dem zweiten oberen Ende verbundenes Oberteil auf.

Weiterhin weist das Temperatursensorsystem ein zumindest teilweise im Unterteil des ersten keramischen Gehäuseteils angeordnetes Temperaturfühlerelement auf. Das Temperaturfühlerelement weist ein keramisches Sensorelementgehäuse, ein im Sensorelementgehäuse angeordnetes Sensorelement sowie elektrische Zuleitungen auf. Das Sensorelementgehäuse ist dabei zumindest teilweise in der zweiten Öffnung angeordnet. Insbesondere kann das Sensorelementgehäuse teilweise im hülsenförmigen Unterteil angeordnet sein und teilweise aus dem hülsenförmigen Unterteil rausragen. Vorzugsweise weisen das keramische Sensorelementgehäuse und das erste keramische Gehäuseteil eine unterschiedliche Wärmeleitfähigkeit auf. Gemäß einer besonders bevorzugten Ausführungsform weist das keramische Sensorelementgehäuse eine höhere Wärmeleitfähigkeit als das erste keramische Gehäuseteil auf.

Gemäß einer weiteren Ausführungsform ist das im Sensorelementgehäuse angeordnete Sensorelement als keramisches Thermistorelement ausgeführt. Beispielsweise kann das Sensorelement ein NTC-Thermistorelement (NTC, "negative temperature coefficient"), das heißt ein Heißleiter, sein. NTC-Thermistorelemente zeichnen sich insbesondere aufgrund ihrer geringen Herstellkosten aus. Ein weiterer Vorteil von NTC-Thermistorelementen beispielsweise gegenüber Thermoelementen oder metallischen Widerstandselementen, wie zum Beispiel Pt-Elementen, besteht in einer ausgeprägten negativen Widerstands-Temperatur-Charakteristik. Weiterhin ist es möglich, dass das Sensorelement als PTC-Thermistorelement (PTC, "positive temperature coefficient"), das heißt als Kaltleiter, ausgeführt ist.

Gemäß einer weiteren Ausführungsform ist das Sensorelement derart im keramischen Sensorelementgehäuse angeordnet, dass zumindest eine Seitenfläche des Sensorelements einen direkten und formschlüssigen Kontakt zum Sensorelementgehäuse aufweist. Beispielsweise kann das Sensorelement mehrere Seitenflächen aufweisen, wobei zumindest eine Seitenfläche ganzflächig in unmittelbarem Kontakt mit einer Innenwand des Sensorelementgehäuses steht. Vorzugsweise ist dabei die Innenwand des Sensorelementgehäuses in diesem Bereich in ihrer Form an die Seitenfläche des Sensorelements angepasst, so dass sich der formschlüssige Kontakt zwischen der Innenwand des Sensorelements und der Innenwand des Sensorelementgehäuses ergibt. Zwischen der in direktem und formschlüssigem Kontakt zum Sensorelementgehäuse stehenden Seitenfläche des Sensorelements und dem Sensorelementgehäuse sind vorzugsweise keine weiteren Elemente, wie zum Beispiel Vergussmaterialien oder Wärmeleitpasten, angeordnet.

Gemäß einer weiteren Ausführungsform weist das Sensorelementgehäuse ein strukturkeramisches Material mit einer hohen Wärmeleitfähigkeit auf oder besteht aus einem solchen Material. Vorzugsweise weist das Sensorelementgehäuse Aluminiumoxid auf. Ein derartiges Sensorelementgehäuse zeichnet sich vorteilhafterweise durch eine besonders hohe Wärmeleitfähigkeit aus. Das Sensorelementgehäuse kann Aluminiumoxid unterschiedlicher Qualität aufweisen. Beispielsweise kann das Sensorelementgehäuse Aluminiumoxid mit einer Reinheit von zumindest 95 % bis 99,9 % oder mehr aufweisen. Dabei nehmen die Robustheit des Sensorelementgehäuses bezüglich der mechanischen Festigkeit und der chemischen Beständigkeit sowie die Wärmeleitfähigkeit mit der Reinheit des Materials zu. Gemäß einer besonders bevorzugten Ausführungsform besteht das Sensorelementgehäuse aus Aluminiumoxid. Alternativ kann das Sensorelementgehäuse ein anderes keramisches Material, wie zum Beispiel Aluminiumnitrid oder Siliciumcarbid, aufweisen oder daraus bestehen.

Vorteilhafterweise weist das Temperatursensorsystem sehr geringe Ansprechzeiten auf, die, beispielsweise abhängig von der Wandstärke und vom Material des Sensorelementgehäuses, vorzugsweise bei unter drei Sekunden liegen. Die Ansprechzeiten können bevorzugt unter eine Sekunde betragen, und, beispielsweise wenn das Sensorelementgehäuse sehr dünne Wandstärken aufweist, sogar bei wenigen Millisekunden liegen.

Gemäß einer weiteren Ausführungsform ist das Sensorelementgehäuse ein Spritzgussgehäuse. Das Sensorelementgehäuse kann insbesondere mittels keramischer Spritzgusstechnologie, beispielsweise mittels der so genannten keramischen Mikro-Spritzgusstechnologie, hergestellt sein. Mittels der keramischen Mikro-Spritzgusstechnologie können vorteilhafterweise sehr kleine an die Dimensionen des Sensorelements angepasste Gehäuseformen des Sensorelementgehäuse präzise, reproduzierbar und eine sehr hohe mechanische Festigkeit aufweisend hergestellt werden, wobei eine standardisierte Einbaugeometrie ermöglicht wird.

Gemäß einer weiteren Ausführungsform weist das Sensorelement eine Perowskitstruktur umfassend die Elemente Y, Ca, Cr, Al, O auf. Weiterhin kann das Sensorelement auf Basis von Perowskiten das Element Sn aufweisen.

Gemäß einer weiteren Ausführungsform weist das Sensorelement ein Keramikmaterial mit einer Perowskitstruktur der allgemeinen chemischen Formel ABO₃ auf. Insbesondere für hochtemperaturstabile Temperaturfühler, die für hohe Anwendungstemperaturen geeignet sein sollen, werden derartige Sensorelemente bevorzugt. Besonders bevorzugt weist das Sensorelement die Zusammensetzung (Y₁₋ₓCaₓ)(Cr_{1-y}Al_{y})O₃ mit x = 0,03 bis 0,05 und y = 0,85 auf.

Gemäß einer weiteren Ausführungsform weist das Sensorelement eine Spinellstruktur umfassend die Elemente Ni, Co, Mn, 0 auf. Das Sensorelement auf Basis von Spinellen kann weiterhin eines oder mehrere der folgenden Elemente aufweisen: Al, Fe, Cu, Zn, Ca, Zr, Ti, Mg.

Gemäß einer weiteren Ausführungsform weist das Sensorelement ein Keramikmaterial mit einer Spinellstruktur der allgemeinen chemischen Formel AB₂O₄ beziehungsweise B(A,B)O₄ auf. Derartige Sensorelemente werden insbesondere bei geringen Anwendungstemperaturen bevorzugt. Gemäß einer besonders bevorzugten Ausführungsform weist das Sensorelement die Zusammensetzung Co_{3-(x+y)}NiₓMn_{y}O₄ mit x = 1, 32 und y = 1, 32 auf.

Gemäß einer weiteren Ausführungsform weist das Sensorelementgehäuse Wandstärken zwischen 0,1 mm und 1 mm auf. Das kann insbesondere bedeuten, dass das Sensorelementgehäuse zumindest eine Gehäusewand aufweist, die Dicken zwischen 0,1 mm und 1 mm aufweist. Bevorzugt weist das Sensorelementgehäuse überall Wandstärken im genannten Bereich auf. Gemäß einer besonders bevorzugten Ausführungsform weist das Sensorelementgehäuse Wandstärken zwischen 0,3 mm und 0,7 mm auf. Durch derartige Wandstärken des Sensorelementgehäuses kann eine besonders geringe Ansprechzeit des Temperaturfühlers erzielt werden.

Gemäß einer weiteren Ausführungsform sind die elektrischen Zuleitungen als zwei Kontaktelemente ausgeführt, die elektrisch leitend mit dem Sensorelement verbunden sind. Vorzugsweise weisen die Kontaktelemente temperaturstabile Materialien mit einer geringen Korrosionsneigung auf. Beispielsweise können die Kontaktelemente edle Metalle wie zum Beispiel Platin, Gold, Silber oder hochtemperaturstabile Stahllegierungen, vorzugsweise mit hohen Gehalten an Chrom und/oder Nickel aufweisen oder aus einem dieser Materialien bestehen.

Gemäß einer weiteren Ausführungsform sind die Kontaktelemente als Anschlussdrähte ausgeführt. Beispielsweise können die Kontaktelemente in Form von mit Nickel ummantelten Kupferdrähten oder mit einem oder mehreren der anderen vorab genannten Metalle ausgebildet sein.

Gemäß einer weiteren Ausführungsform weist das Sensorelement zwei Elektroden auf. Die Elektroden sind vorzugsweise auf zwei gegenüberliegenden Seitenflächen des Sensorelements aufgebracht. Vorzugsweise sind die Kontaktelemente jeweils mittels einer eingebrannten Metallisierungspaste mit einer der Elektroden des Sensorelements elektrisch leitend verbunden. Die Elektroden des Sensorelements können beispielsweise, abhängig von der maximalen Einsatztemperatur des Temperaturfühlers, Metalle, zum Beispiel Platin, Gold, Silber, oder Metalllegierungen, zum Beispiel Silber-Palladium, aufweisen oder daraus bestehen. Die der elektrischen Kontaktierung zwischen den Kontaktelementen und den Elektroden des Sensorelements dienenden Metallisierungspasten weisen vorzugsweise edle Metalle wie zum Beispiel Gold, Silber oder Platin auf oder bestehen daraus. Weiterhin können die Metallisierungspasten Kupfer, Molybdän oder Wolfram oder eine Metalllegierung, zum Beispiel Silber-Palladium, aufweisen oder daraus bestehen.

Gemäß einer weiteren Ausführungsform ist das Sensorelementgehäuse rückseitig mittels einer Glasversiegelung verschlossen. Vorzugsweise ragen die Kontaktelemente aus der Glasversiegelung heraus und reichen somit vom Inneren des Sensorelementgehäuse durch die Glasversiegelung nach außen. Die Glasversiegelung weist beispielsweise alkali- und/oder schwermetalloxidfreie Gläser mit einem an das Material des Sensorelementgehäuses angepassten Ausdehnungskoeffizienten auf. Vorteilhafterweise weist das für die Glasversiegelung verwendete Material einen Erweichungspunkt auf, der mindestens 50 °C über einer maximalen Einsatztemperatur des Temperaturfühlers liegt.

Gemäß einer weiteren Ausführungsform weist das Oberteil des ersten keramischen Gehäuseteils Aussparungen auf, in dem die elektrischen Zuleitungen des Temperaturfühlerelements zumindest teilweise angeordnet und geführt sind. Die Aussparungen können zum Beispiel in Form von innen liegenden Taschen oder Vertiefungen, die der Führung und Aufnahme der elektrischen Zuleitungen dienen, ausgeführt sein.

Gemäß einer weiteren Ausführungsform sind das Unterteil und das Oberteil des ersten keramischen Gehäuseteils einstückig ausgebildet. Beispielsweise können das Unterteil und das Oberteil in einem gemeinsamen Fertigungsprozess hergestellt sein. Das Unterteil und das Oberteil sind insbesondere nicht zwei getrennt hergestellte Bauteile, die mittels eines Verbindungsverfahrens, beispielsweise mit Hilfe eines Befestigungsmittels, miteinander verbunden werden. Vorteilhafterweise sind zwischen dem Unterteil und dem Oberteil des ersten keramischen Gehäuseteils keine Schnittstellen vorhanden.

Gemäß einer weiteren Ausführungsform ist das erste keramische Gehäuseteil ein Spritzgussteil. Beispielsweise kann das erste keramische Gehäuseteil mittels der sogenannten keramischen Spritzgusstechnologie hergestellt sein. Mit Hilfe der keramischen Spritzgusstechnologie können vorteilhafterweise sehr komplexe, an kundenspezifische Anforderungen angepasste keramische Gehäusebauformen, die eine hohe mechanische Festigkeit aufweisen, präzise und reproduzierbar hergestellt werden.

Gemäß einer weiteren Ausführungsform weist das erste keramische Gehäuseteil ein Material mit einer geringen Wärmeleitfähigkeit auf. Vorzugsweise weist das erste keramische Gehäuseteil Mullit, Steatit oder Zirkoniumoxid auf oder besteht aus einem der genannten Materialien. Vorteilhafterweise wird durch eine Verwendung von schlecht wärmeleitfähigen keramischen Materialien eine verstärkte Wärmeableitung über das erste keramische Gehäuseteil vermieden, die zu einer Verzögerung der Ansprechzeit des Temperatursensorsystems führen würde.

Zusätzlich wird erreicht, dass weniger Wärme nach außen abgeführt werden kann und Temperaturen im Bereich der elektrischen Zuleitungen verringert sind. Gleichzeitig besitzen die genannten Materialien eine sehr hohe mechanische Festigkeit und verleihen dem Sensorsystem die notwendige mechanische Stabilität, um die geforderten Belastungen in den Anwendungen zu erfüllen. Beispielsweise ist durch eine Verwendung von stabilisiertem Zirkoniumoxid auch eine Verwendung in besonders extremen Einsatzfällen mit besonders hohen mechanischen und/oder chemischen Belastungen möglich.

Gemäß einer weiteren Ausführungsform weist das keramische Sensorelementgehäuse einen umlaufenden Vorsprung auf. Vorzugsweise ist der Vorsprung mittels einer Klebeverbindung formschlüssig mit der zweiten Öffnung verbunden.

Gemäß einer weiteren Ausführungsform weist das Temperatursensorsystem ein zweites keramisches Gehäuseteil auf, das mit dem Oberteil des ersten keramischen Gehäuseteils verbunden ist. Das zweite keramische Gehäuseteil verschließt vorzugsweise das Temperatursensorsystem. Das Oberteil kann beispielsweise einen Fortsatz aufweisen, der in das offene obere Ende des hülsenförmigen Unterteils ragt und mittels dessen das Oberteil am Unterteil fixiert werden kann. Vorzugsweise weist der Fortsatz Aussparungen auf, in denen die elektrischen Zuleitungen des Temperaturfühlerelements zumindest teilweise angeordnet und geführt sind. Somit können das erste und das zweite keramische Gehäuseteil mit integrierten und vorzugsweise geometrisch an die elektrischen Zuleitungen angepassten Leitungsführungen versehen sein. Weiterhin können das erste und zweite keramische Gehäuseteil Dichtflächen, die beispielsweise mit einem Verbindungsstoff für eine Verklebung gefüllt werden können, versehen sein.

Gemäß einer weiteren Ausführungsform weist das zweite keramische Gehäuseteil das gleiche Material wie das erste keramische Gehäuseteil auf. Das zweite keramische Gehäuseteil ist vorzugsweise wie das erste keramische Gehäuse ein Spritzgussteil, das mittels der keramischen Spritzgusstechnologie hergestellt sein kann.

Gemäß einer weiteren Ausführungsform sind das erste und das zweite keramische Gehäuseteil durch einen Verbindungsstoff miteinander verbunden. Der Verbindungsstoff kann, beispielsweise abhängig von der Einsatztemperatur des Temperatursensorsystems ein Polymer, Glas oder einen keramischen Kleber aufweisen oder ein Polymer, Glas oder keramischer Kleber sein. Vorzugsweise sind das erste und das zweite keramische Gehäuseteil mittels des Verbindungsstoffes über Dichtflächen kraft- und formschlüssig miteinander verbunden.

Gemäß einer weiteren Ausführungsform weist das Temperatursensorsystem ein Vergussmaterial auf, das im Unterteil des ersten keramischen Gehäuseteils angeordnet ist und das das Temperaturfühlerelement teilweise, vorzugsweise mit Ausnahme von aus dem Unterteil ragenden Bereichen des Sensorelementgehäuses, umschließt. Das Vergussmaterial kann beispielsweise ein Polymer, vorzugsweise ein temperaturstabiles Polymer, ein Glas oder ein zementartiges Material, wie zum Beispiel Aluminiumoxidzement, aufweisen oder aus einem dieser Materialien bestehen. Dabei hängt die Wahl des Vergussmaterials insbesondere von der Einsatztemperatur des Temperatursensorsystems ab. Beispielsweise kann das Vergussmaterial bei einer Einsatztemperatur bis zu 300 °C ein temperaturstabiles Polymer aufweisen oder daraus bestehen. Bei Einsatztemperaturen bis zu 1000 °C wird insbesondere Glas oder ein zementartiges Material bevorzugt.

Gemäß einer weiteren Ausführungsform weisen das Vergussmaterial und der Verbindungsstoff das gleiche Material auf. Beispielsweise kann als Vergussmaterial ein temperaturstabiles Vergussmaterial mit Klebeeigenschaften eingesetzt werden. Das Material für die Verklebung des ersten und zweiten keramischen Gehäuseteils kann auch gleichzeitig zur Fixierung der elektrischen Zuleitungen und/oder von mit den elektrischen Zuleitungen verbundenen Anschlussleitungen und/oder zur Füllung einer Verbindungsstelle zu den elektrischen Zuleitungen und Leitungsführungen dienen.

Vorteile des hier beschriebenen Temperatursensorsystems liegen in einer sehr präzisen Ausführung der Gehäusedimension, die eine einfache und standardisierte Montage ohne zusätzliche Systemelemente ermöglicht. Bei gleichzeitig sehr kurzen Ansprechzeiten, einer sehr hohen mechanischen und chemischen Robustheit sowie einer extremen Langzeitstabilität.

Weiterhin wird ein Verfahren zur Herstellung eines Temperatursensorsystems angegeben. Das dadurch herstellbare oder hergestellte Temperatursensorsystem kann eines oder mehrere Merkmale der vorgenannten Ausführungsformen aufweisen. Die vorher und im Folgenden beschriebenen Ausführungsformen gelten gleichermaßen für das Temperatursensorsystem wie auch für das Verfahren zur Herstellung des Temperatursensorsystems.

Gemäß einer Ausführungsform werden das Temperaturfühlerelement mit einem keramischen Sensorelementgehäuse sowie das erste und das zweite keramische Gehäuseteil bereitgestellt.

Das erste und zweite keramische Gehäuseteil können beispielsweise mittels einer keramischen Spritzgusstechnologie hergestellt sein. Dabei wird ein keramischer Feedstock, aufweisend ein strukturkeramisches Pulver, vorteilhafterweise Mullit, Steatit oder stabilisiertes Zirkoniumoxid, und ein organisches Bindemittel in eine entsprechende Form gespritzt. Die daraus entstehenden sogenannten Grünkörper werden anschließend in einem Entbinderungsprozess, der zweistufig, das heißt wässrig und thermische, oder einstufig, das heißt nur thermisch, ist weitgehend vom organischen Anteil befreit. Nachfolgend werden die entbindernden Körper bei geeigneter Temperatur gesintert.

Das keramische Sensorelementgehäuse des Temperaturfühlerelements wird vorzugsweise ebenfalls mittels der keramischen Spritzgusstechnologie hergestellt. Dabei wird ein keramischer Feedstock, aufweisend ein strukturkeramisches Pulver, wie zum Beispiel Aluminiumoxidpulver, Aluminiumnitridpulver oder Siliciumcarbidpulver, und ein organisches Bindemittel in eine entsprechende Form gespritzt. Diese sogenannten Grünkörper werden anschließend in einem Entbinderungsprozess der wiederum zweistufig oder einstufig sein kann, weitgehend vom organischen Anteil befreit. Nachfolgend werden die entbinderten Körper bei geeigneter Temperatur, beispielsweise im Falle von Aluminiumoxid abhängig von der Reinheit bei 1600 °C bis 1700 °C gesintert.

Gemäß einer weiteren Ausführungsform wird ein bereitgestelltes Sensorelement im so hergestellten Sensorelementgehäuse derart angeordnet, dass zumindest eine Seitenfläche des Sensorelements einen direkten und formschlüssigen Kontakt zum Sensorelementgehäuse aufweist. Weiterhin werden Kontaktelemente, die die elektrischen Zuleitungen des Temperaturfühlerelements bilden, nach dem Anordnen des Sensorelements im Sensorelementgehäuse jeweils mittels einer Metallisierungspaste elektrisch leitend mit den Elektroden des Sensorelements verbunden. Beispielsweise können die Metallisierungspasten in die Seitentaschen der Vertiefung eindosiert werden und die Kontaktelemente anschließend in die Seitentaschen eingebracht werden, so dass Enden der Kontaktelemente jeweils in der Metallisierungspaste eingebettet sind. Vorzugsweise wird die Metallisierungspaste anschließend bei einer geeigneten Temperatur, die vom verwendeten Material der Metallisierungspaste abhängig ist, eingebrannt.

Gemäß einer weiteren Ausführungsform wird die Öffnung des Sensorelementgehäuses mittels einer Glaspaste verschlossen. Anschließend wird die Glaspaste bei einer geeigneten Temperatur eingebrannt. Vorzugsweise ist das für die Glaspaste verwendete Glasmaterial auf die zukünftige Einsatztemperatur des Temperaturfühlers abgestimmt und weist einen Erweichungspunkt T_{G} von mindestens 50 °C über der maximalen Einsatztemperatur des Temperaturfühlers auf.

Gemäß einer weiteren Ausführungsform wird zur Einstellung einer geringen Widerstandstoleranz durch einen nachfolgenden Temperprozess der Widerstand der Elemente in begrenztem Umfang nachjustiert.

Anschließend wird das so hergestellte Temperaturfühlerelement im hülsenförmigen Unterteil des ersten keramischen Gehäuseteils derart angeordnet, dass das Sensorelementgehäuse zumindest teilweise in der ersten Öffnung angeordnet ist. Vorzugsweise ragt dabei ein Teil des Sensorelementgehäuses aus dem hülsenförmigen Unterteil des ersten keramischen Gehäuseteils heraus. Anschließend wird Vergussmaterial in das erste keramische Gehäuseteil derart eingebracht, dass das Temperaturfühlerelement zumindest teilweise im Vergussmaterial eingebettet ist. Danach wird ein Teil der elektrischen Zuleitungen innerhalb der Aussparungen des Oberteils des ersten keramischen Gehäuseteils angeordnet. Anschließend wird das Oberteil des ersten keramischen Gehäuseteils mit dem zweiten keramischen Gehäuseteils mittels eines Verbindungsstoffes verbunden.

Gemäß einer weiteren Ausführungsform wird Vergussmaterial in das erste keramische Gehäuseteil derart eingebracht, dass das Sensorelementgehäuse vom Vergussmaterial teilweise umschlossen ist. Vorzugsweise ist insbesondere der im hülsenförmigen Unterteil angeordnete Teil des Sensorelementgehäuses vom Vergussmaterial umschlossen. Weiterhin wird ein Teil der elektrischen Zuleitung in den Aussparungen des Oberteils des ersten keramischen Gehäuseteils angeordnet. Anschließend wird das Oberteil des ersten keramischen Gehäuseteils mit dem zweiten keramischen Gehäuseteil mittels eines Verbindungsstoffes, der zum Beispiel ein Polymer, ein Glas oder einen keramischen Kleber aufweist, verbunden. Gemäß einer bevorzugten Ausführungsform weisen das Vergussmaterial und der Verbindungsstoff das gleiche Material auf.

Gemäß einer weiteren Ausführungsform werden die elektrischen Zuleitungen des Temperaturfühlerelements mittels Hartlöten, Crimpen oder Schweißen mit den Anschlussleitungen verbunden. Weiterhin werden vorzugsweise Teilbereiche der elektrischen Zuleitungen und/oder der Anschlussleitungen vor dem Verbinden des Oberteils mit dem zweiten keramischen Gehäuseteil teilweise in den Aussparungen des Oberteils des ersten keramischen Gehäuseteils angeordnet.

Gemäß einer weiteren Ausführungsform werden die Anschlussleitungen anschließend in einem Austrittsbereich aus dem ersten und/oder zweiten keramischen Gehäuseteil mittels eines Polymers oder mittels Glas abgedichtet.

Weitere Vorteile und vorteilhafte Ausführungsformen des Temperatursensorsystems ergeben sich aus den im Folgenden in Verbindung mit den Figuren 1 bis 12 beschriebenen Ausführungsformen.

Es zeigen:
- Figuren 1 bis 4: schematische Darstellungen eines Temperatursensorsystems gemäß einem Ausführungsbeispiel,
- Figur 5: eine schematische Schnittansicht des Temperatursensorsystems der Figuren 1 bis 4,
- Figur 6: eine schematische Darstellung des Temperatursensorsystems der Figuren 1 bis 5 in Form einer Explosionsdarstellung,
- Figuren 7 und 8: schematische Ansichten eines Temperaturfühlerelements gemäß einem Ausführungsbeispiel,
- Figur 9: eine schematische Schnittansicht des Temperaturfühlerelements der Figuren 7 und 8,
- Figur 10: eine schematische Ansicht eines Sensorelementgehäuses des Temperaturfühlerelements der Figuren 7 bis 9,
- Figur 11: eine schematische Darstellung des Temperaturfühlerelements der Figuren 7 bis 9 in Form einer Explosionsdarstellung, und
- Figur 12: ein Verfahren zur Herstellung eines Temperatursensorsystems gemäß einem weiteren Ausführungsbeispiel.

In den Ausführungsbeispielen und Figuren können gleiche oder gleich wirkende Bestandteile jeweils mit den gleichen Bezugszeichen versehen sein. Die dargestellten Elemente und deren Größenverhältnisse untereinander sind grundsätzlich nicht als maßstabsgerecht anzusehen. Vielmehr können einzelne Elemente, wie zum Beispiel Schichten, Bauteile und Bereiche zur besseren Darstellbarkeit und/oder zum besseren Verständnis übertrieben dick oder groß dimensioniert dargestellt sein.

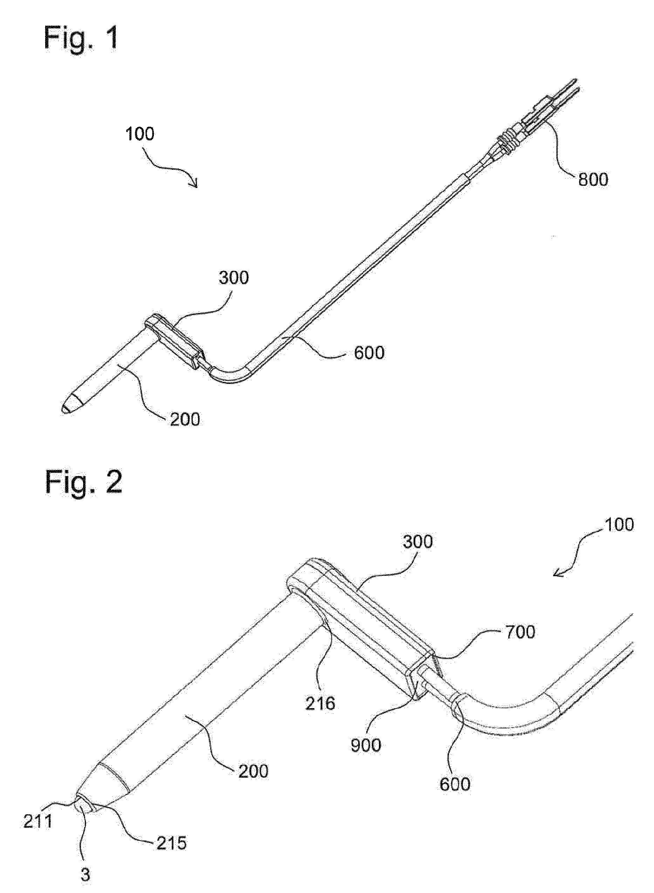

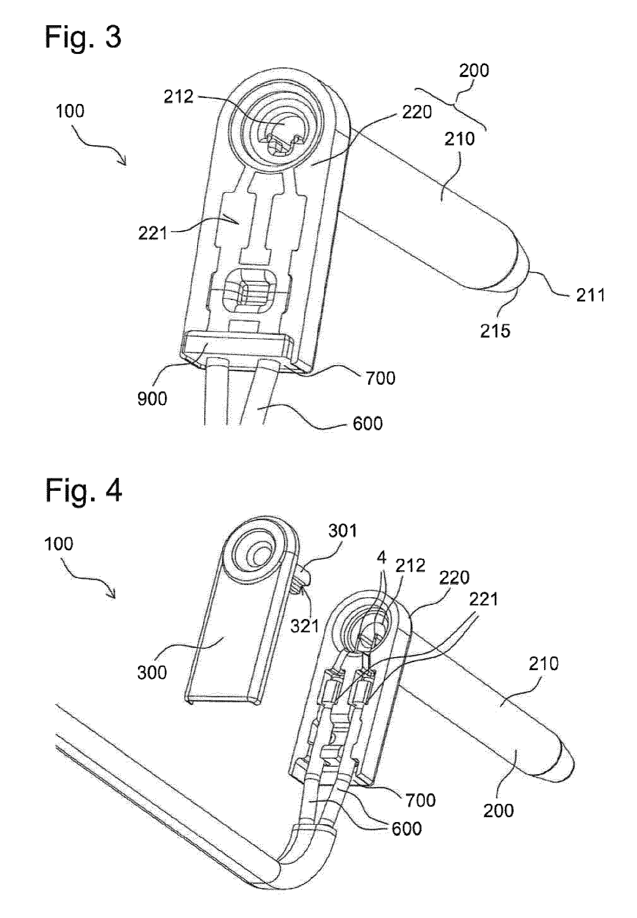

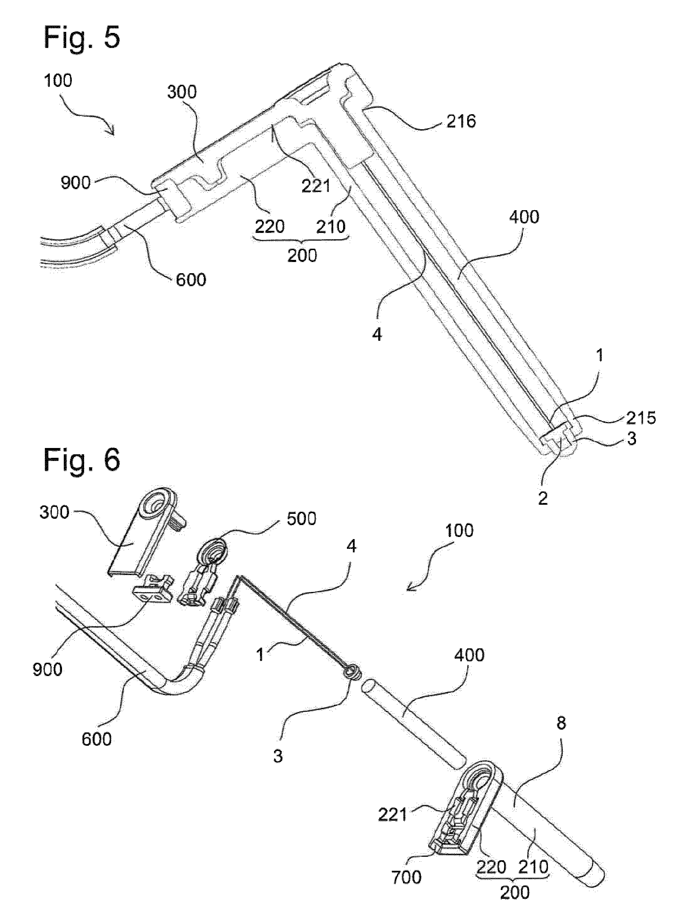

Die Figuren 1 bis 4 zeigen verschiedene Ansichten eines hier beschriebenen Temperatursensorsystems 100 gemäß einem Ausführungsbeispiel. Dabei ist das Temperatursensorsystem 100 in der Figur 3 ohne das zweite keramische Gehäuseteil 300 dargestellt. Figur 5 zeigt das Temperatursensorsystem 100 aus den Figuren 1 bis 4 in der Schnittansicht und in Figur 5 ist das Temperatursensorsystem 100 in Form einer Explosionsdarstellung gezeigt. Die nachfolgende Beschreibung bezieht sich gleichermaßen auf die Figuren 1 bis 6.

Das Temperatursensorsystem 100 weist ein erstes keramisches Gehäuseteil 200 auf. Das erste keramische Gehäuseteil 200 weist ein hülsenförmiges Unterteil 210 mit einem ersten, eine erste Öffnung 211 aufweisenden unteren Ende 215 und einem zweiten, eine zweite Öffnung 212 aufweisenden oberen Ende 216 sowie ein mit dem zweiten oberen Ende 216 verbundenes Oberteil 220 auf. Das hülsenförmige Unterteil 210 und das Oberteil 220 bilden zusammen einen "L-förmigen" Körper, der einstückig ausgebildet ist. Das erste keramische Gehäuseteil 200 ist ein Spritzgussteil, das mittels eines keramischen Spritzgussverfahrens hergestellt ist. Das erste keramische Gehäuseteil 200 weist Mullit auf. Alternativ kann das erste keramische Gehäuseteil 200 auch Steatit oder Zirkoniumoxid aufweisen oder aus einem der genannten Materialien bestehen.

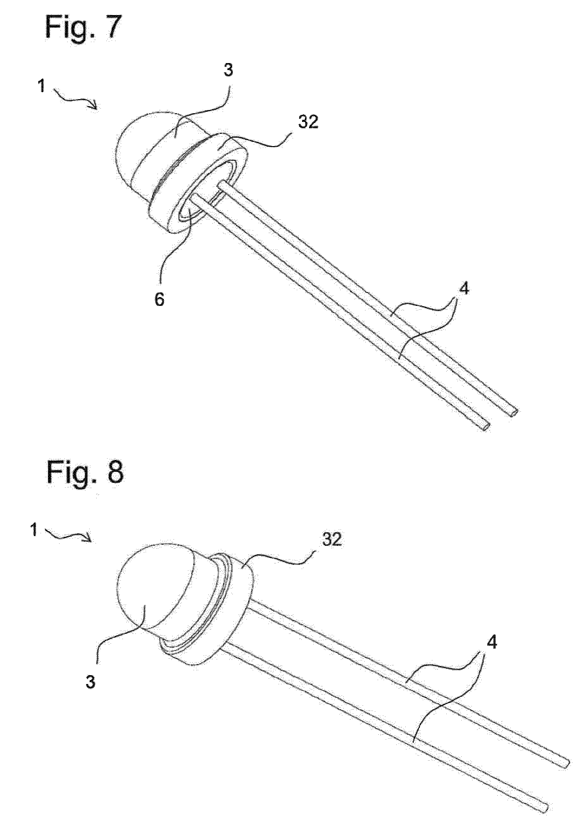

Ein Temperaturfühlerelement 1, das ein keramisches Sensorelementgehäuse 3, ein im Sensorelementgehäuse 3 angeordnetes Sensorelement 2 und elektrische Zuleitungen 4 aufweist, ist zumindest teilweise im Unterteil 210 des ersten keramischen Gehäuseteils 200 angeordnet. Das keramische Sensorelementgehäuse 3 weist eine höhere Wärmeleitfähigkeit als das erste keramische Gehäuseteil 200 auf. Auf die genaue Ausgestaltung des Temperaturfühlerelements 1 gemäß einem Ausführungsbeispiel wird weiter unten im Zusammenhang mit den Figuren 7 bis 11 eingegangen.

Das Sensorelementgehäuse 3 des Temperaturfühlerelements 1 ist zumindest teilweise in der ersten Öffnung 211 angeordnet. Dabei ist das Sensorelementgehäuse 3 am unteren Ende 215 teilweise innerhalb des hülsenförmigen Unterteils 210 angeordnet und ragt teilweise aus der ersten Öffnung 211 heraus. Die mit dem Sensorelement 2 verbundenen elektrischen Zuleitungen 4 verlaufen in Richtung des zweiten oberen Endes 216.

Das Oberteil 220 des ersten keramischen Gehäuseteils 200 weist Aussparungen 221 auf, in denen die elektrischen Zuleitungen 4 des Temperaturfühlerelements 1 zumindest teilweise angeordnet und geführt sind. Das Unterteil 210 und das Oberteil 220 des ersten keramischen Gehäuseteils 200 sind einstückig ausgebildet. Das erste keramische Gehäuseteil 200 ist ein Spritzgussteil, das mittels eines keramischen Spritzgussverfahrens hergestellt ist. Das erste keramische Gehäuseteil weist Mullit auf. Alternativ kann das erste keramische Gehäuseteil 200 Steatit oder Zirkoniumoxid aufweisen oder aus einem dieser Materialien bestehen.

Das Temperatursensorsystem 100 weist weiterhin ein zweites keramischen Gehäuseteil 300 auf, das mit dem Oberteil 220 des ersten keramischen Gehäuseteils 200 verbunden ist. Das zweite keramische Gehäuseteil 300 weist einen Fortsatz 301 auf, der Aussparungen 321 aufweist, in denen die elektrischen Zuleitungen zumindest teilweise angeordnet und geführt sind. Das zweite keramische Gehäuseteil 300 weist ebenfalls Mullit auf und ist auch als Spritzgussteil hergestellt.

Das erste und das zweite keramische Gehäuseteil 200, 300 sind mittels eines Verbindungsstoffes 500 miteinander verbunden. Der Verbindungsstoff 500 weist ein Polymer auf. Alternativ kann der Verbindungsstoff 500 ein Glas oder einen keramischen Kleber aufweisen oder aus einem der genannten Materialien bestehen.

Im hülsenförmigen Unterteil 210 des ersten keramischen Gehäuseteils 200 ist ein Vergussmaterial 400 angeordnet, das das Temperaturfühlerelement 1 teilweise umschließt und fixiert. Das Vergussmaterial 400 weist ein Polymer auf. Alternativ kann das Vergussmaterial 400 ein Glas oder ein zementartiges Material, wie zum Beispiel Aluminiumoxidzement aufweisen oder aus einem der genannten Materialien bestehen.

Die elektrischen Zuleitungen 4 sind mit temperaturstabilen Anschlussleitungen 600 mittels Hartlöten verbunden. Alternativ können die elektrischen Zuleitungen 4 mit den Anschlussleitungen 600 mittels Crimpen oder Verschweißen verbunden sein. Die Anschlussleitungen 600 weisen eine Ummantelung auf, die aus einem Polymer besteht. Weiterhin ist es möglich, dass die Ummantelung der Anschlussleitungen 600 aus Glasfaser besteht oder dass die Anschlussleitungen 600 als metallummantelte mineralisolierte Leitungen ausgeführt sind. Die Anschlussleitungen 600 sind mittels Crimpen mit einer Steckverbindung 800 verbunden. Alternativ kann die Verbindung der Anschlussleitungen 600 und der Steckverbindung 800 mittels Löten oder Schweißen erfolgen.

Das Temperatursensorsystem 100 weist einen Austrittsbereich 700 auf, in dem die Anschlussleitungen 600 aus dem ersten und zweiten keramischen Gehäuseteil 200, 300 austreten. Der Austrittsbereich 700 ist mittels einer Abdichtung 900 verschlossen, die ein Polymer aufweist. Alternativ kann die Abdichtung 900 ein Glas oder ein keramisches Vergussmaterial aufweisen oder aus einem der genannten Materialien bestehen.

Im Folgenden wird anhand der Figuren 7 bis 11 auf das im hülsenförmigen Unterteil 210 des ersten keramischen Gehäuseteils angeordnete Temperaturfühlerelement 1 eingegangen.

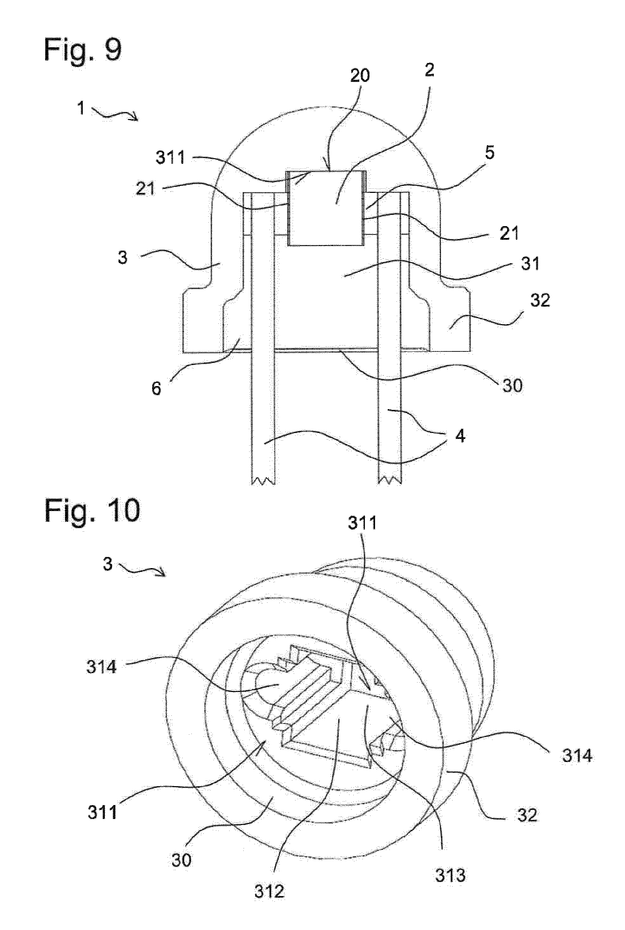

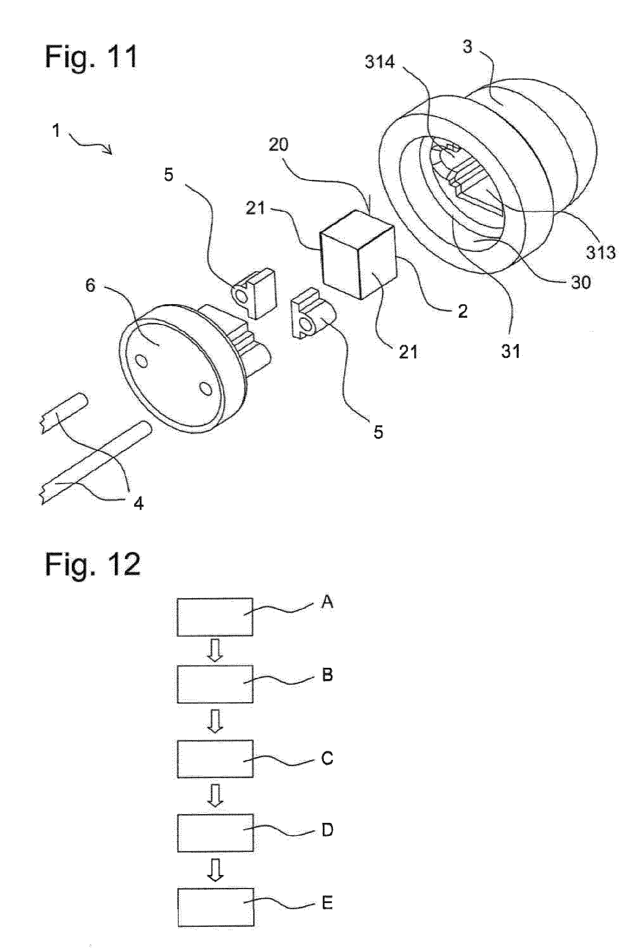

Die Figuren 7 und 8 zeigen verschiedene schematische Ansichten des Temperaturfühlerelements 1 gemäß einem Ausführungsbeispiel. Die in den Figuren 7 und 8 nicht dargestellten Elemente des Temperaturfühlerelements 1 sind in der Schnittansicht des Temperaturfühlerelements 1 in Figur 9, in der schematischen Darstellung des Sensorelementgehäuses 3 in Figur 10 sowie in der Explosionsdarstellung des Temperaturfühlerelements 1 in Figur 11 gezeigt. Die nachfolgende Beschreibung bezieht sich gleichermaßen auf die Figuren 7 bis 11.

Das Temperaturfühlerelement 1 weist ein Sensorelement 2, das als NTC-Thermistorelement ausgeführt ist, und ein Sensorelementgehäuse 3 auf. Das Sensorelement 2 ist derart im Sensorelementgehäuse 3 angeordnet, dass eine Seitenfläche 20 des Sensorelements 2 einen direkten und formschlüssigen Kontakt zum Sensorelementgehäuse 3, insbesondere zu einer Bodenfläche 311 des Sensorelementgehäuses 3, aufweist. Das Sensorelementgehäuse 3 weist Aluminiumoxid mit einer Reinheit von größer oder gleich 95 % auf und ist als Spritzgussgehäuse ausgeführt, das mittels der sogenannten keramischen Mikro-Spritzgusstechnologie hergestellt ist. Alternativ kann das Sensorelementgehäuse 3 ein oder mehrere andere, vorzugsweise gut wärmeleitende, Keramikmaterialien aufweisen. Insbesondere weist das Sensorelementgehäuse 3 ein Material auf, das eine größere Wärmeleitfähigkeit als das Material des ersten keramischen Gehäuseteils 200 aufweist.

Das Sensorelement weist im gezeigten Ausführungsbeispiel eine Keramik mit einer Perowskitstruktur auf. Insbesondere weist die Keramik des Sensorelements eine Zusammensetzung nach der Formel (Y₁₋ₓCaₓ)(Cr_{1-y}Al_{y})O₃ mit x = 0, 03 bis 0, 05 und y = 0, 85 auf. Dadurch eignet sich das Temperaturfühlerelement 1 besonders für Hochtemperaturanwendungen. Alternativ kann das Sensorelement, insbesondere bei geringeren Anwendungstemperaturen des Temperaturfühlerelements 1, eine Keramik mit einer Spinellstruktur aufweisen. Beispielsweise kann die Keramik des Sensorelements eine Zusammensetzung gemäß der Formel Co_{3-(x+y)}NiₓMn_{y}O₄ mit x = 1,32 und y = 1,32 aufweisen.

Das Sensorelementgehäuse 3 weist eine Öffnung 30 auf, durch die das Sensorelementgehäuse 3 halbseitig geöffnet ist. Innerhalb des Sensorelementgehäuses 3 ist eine Kavität 31 ausgebildet, die eine der Öffnung 30 gegenüberliegende Bodenfläche 311 mit einer stufenförmigen Vertiefung 312 aufweist. Das Sensorelement 2 ist zumindest teilweise versenkt in der Vertiefung 312 angeordnet. Insbesondere ist das Sensorelement 2 in einem Hauptbereich 313 der Vertiefung 312, der hinsichtlich Form und Größe an eine Länge und Breite des Sensorelements 2 angepasst ist, angeordnet. An den Hauptbereich 313 der Vertiefung 312 grenzt an zwei gegenüberliegende Seiten des Hauptbereichs 313 jeweils eine Seitentasche 314 an. Die Seitentaschen 314 sind ebenso wie der Hauptbereich 313 vertiefte Bereiche innerhalb der Kavität 31. Bei einem Blick in die Öffnung 30 hinein weist der Hauptbereich 313 zwischen den Seitentaschen 314 einen vertieften Bereich auf, der stufenförmig an die übrigen Bereiche der Kavität 31 angrenzt und dessen Bodenfläche 311 von der Öffnung 30 aus gesehen eine größere Tiefe als die Seitentaschen 314 aufweisen.

Das Temperaturfühlerelement 1 weist elektrische Zuleitungen 4 auf, die als zwei Kontaktelemente ausgeführt sind und jeweils zumindest teilweise in einer der Seitentaschen 314 angeordnet sind. Mit ihrem jeweiligen anderen Ende ragen die Kontaktelemente aus dem Sensorelementgehäuse 3 heraus und dienen so der externen Kontaktierung des Temperaturfühlerelements 1. Die Kontaktelemente weisen Platin auf. Alternativ können die Kontaktelemente Gold, Silber oder andere edle Metalle, oder aber Legierungen, vorzugsweise hochtemperaturstabile Stahllegierungen, beispielsweise mit hohen Gehalten an Chrom und/oder Nickel aufweisen oder daraus bestehen.

Das Sensorelement 2 weist auf zwei gegenüberliegenden Seitenflächen jeweils eine Elektrode 21 auf. Die Elektroden 21 des Sensorelements 2 weisen Platin auf. Alternativ können die Elektroden 21 Gold oder Silber oder Silber-Palladium aufweisen oder daraus bestehen. Die Kontaktelemente sind jeweils mittels einer eingebrannten Metallisierungspaste 5, die in den Seitentaschen 314 angeordnet sind, mit jeweils einer der Elektroden 21 des Sensorelements 2 elektrisch leitend verbunden. Die Metallisierungspasten 5 dienen sowohl der Fixierung der Kontaktelemente innerhalb der Seitentaschen 314 als auch der elektrischen Kontaktierung zwischen den Kontaktelementen und den Elektroden 21 des Sensorelements 2. Im gezeigten Ausführungsbeispiel weisen die Metallisierungspasten 5 Gold auf. Alternativ können die Metallisierungspasten 5 Silber, Platin, Kupfer, Molybdän oder Wolfram oder Silber-Palladium aufweisen oder daraus bestehen.

Das Sensorelementgehäuse 3 weist ein der Öffnung gegenüberliegendes abgerundetes Ende an der Außenseite auf. Weiterhin weist das Sensorelementgehäuse 3 einen an die Öffnung 30 angrenzenden Vorsprung 32 auf. Der Vorsprung 32 ist als umlaufender Bund ausgeführt und kann mittels einer Klebverbindung formschlüssig mit der zweiten Öffnung 212 des unteren Endes 215 des hülsenförmigen Unterteils 210 verbunden werden.

Weiterhin ist das Sensorelementgehäuse 3 rückseitig mittels einer Glasversiegelung 6 verschlossen, durch die die Kontaktelemente hindurch ragen. Das Temperaturfühlerelement 1 zeichnet sich aufgrund seines Aufbaus und der verwendeten Materialien insbesondere durch eine gute Langzeit-Medienbeständigkeit, eine hohe Robustheit und eine sehr geringe Ansprechzeit aus.

Das Sensorelement 2 des Temperaturfühlerelements 1 weist Abmessungen von ca. 0,85 mm x 0,7 mm x 0,7 mm auf. Das Sensorelementgehäuse 3 des Temperaturfühlerelements 1 weist maximale äußere Abmessungen von ca. 2,5 mm x 2,3 mm (Durchmesser x Höhe) auf. Weiterhin weist das Sensorelementgehäuse 3 Wandstärken zwischen 0,1 mm und 1 mm auf. Die Länge des Temperaturfühlerelements 1 einschließlich der Kontaktelemente beträgt ca. 10,8 mm.

Vorteilhafterweise weist das Temperatursensorsystems 100 sehr kurzen Ansprechzeiten, eine sehr hohe mechanische sowie chemische Robustheit und einer gute Langzeitstabilität auf. Dadurch kann das Temperatursensorsystem 100 auch bei hohen Anwendungstemperaturen und in besonders aggressiven Medien beziehungsweise Gasen eingesetzt werden. Weitere Vorteile des Temperatursensorsystems 100 liegen in einer sehr präzisen Ausführung der Gehäusedimension, die eine einfache und standardisierte Montage ohne zusätzliche Systemelemente ermöglicht.

Figur 12 zeigt ein Verfahren zur Herstellung eines hier beschriebenen Temperatursensorsystems 100 gemäß einem Ausführungsbeispiel. Dabei werden in einem ersten Verfahrensschritt A ein Temperaturfühlerelement 1 sowie ein erstes und ein zweites keramisches Gehäuseteil 200, 300 bereitgestellt. Die im Folgenden verwendeten Bezugzeichen beziehen sich auf die Ausführungsbeispiele der Figuren 1 bis 11.

Das erste und zweite keramische Gehäuseteil 200, 300 werden vorzugsweise mittels keramischer Spritzgusstechnologie hergestellt. Dabei wird ein keramischer Feedstock, der ein strukturkeramisches Pulver aus Mullit und einem organischen Bindemittel aufweist, in eine gewünschte Form gespritzt und die daraus entstehenden Grünkörper werden anschließend in einem Entbinderungsprozess weitgehend von organischen Anteilen befreit. Danach werden die entbinderten Körper bei einer geeigneten Temperatur gesintert.

Bei der Herstellung des Temperaturfühlerelements 1 wird in ein keramisches Ausgangsmaterial mittels eines keramischen Spritzgussverfahrens zu einem Grünkörper geformt und anschließend wird der Grünkörper zu einem Sensorelementgehäuse 3 versintert. Vorzugsweise wird der Grünkörper dabei vor dem Versintern mittels eines ein- oder zweistufigen Entbinderungsprozesses von organischen Anteilen befreit. Danach wird ein bereitgestelltes Sensorelement 2 derart im Sensorelementgehäuse 3 angeordnet. Anschließend wird eine Metallisierungspaste 5 in Seitentaschen 314 des Sensorelementgehäuse 3 eingebracht und danach werden elektrische Zuleitungen 4 in den Seitentaschen 314 angeordnet, so dass Enden der elektrischen Zuleitungen 4 in den Metallisierungspasten 5 eingebettet sind. Danach wird die Metallisierungspaste 5 eingebrannt. Nachfolgend wird das Sensorelementgehäuse 3 rückseitig mittels einer Glaspaste 6 verschlossen und die Glaspaste 6 anschließend eingebrannt.

Nach der Bereitstellung der so hergestellten ersten und zweiten keramischen Gehäuseteile 200, 300 und des so hergestellten Temperaturfühlerelements 1 wird in einem nachfolgenden Verfahrensschritt B das Temperaturfühlerelement 1 derart im hülsenförmigen Unterteil 210 des ersten keramischen Gehäuseteils 200 angeordnet, dass das Sensorelementgehäuse 3 teilweise in der ersten Öffnung 211 angeordnet ist und teilweise aus dem hülsenförmigen Unterteil 210 herausragt.

Danach wird im Verfahrensschritt C Vergussmaterial 400 in das erste keramische Gehäuseteil 200, insbesondere in das hülsenförmige Unterteil 210, derart eingebracht, dass das Temperaturfühlerelement 1 bis auf den aus der ersten Öffnung 211 ragenden Teil des Sensorelementgehäuses 3 vom Vergussmaterial 400 umschlossen ist. Das Vergussmaterial 400 weist vorzugsweise ein Polymer auf. Alternativ kann das Vergussmaterial 400 ein Glas oder ein zementartiges Material, wie zum Beispiel Aluminiumoxidzement, aufweisen oder aus einem der genannten Materialien bestehen.

Im sich daran anschließenden Verfahrensschritt D wird ein Teil der elektrischen Zuleitungen 4 des Temperaturfühlerelements 1 in den Aussparungen 221 des Oberteils 200 des ersten keramischen Gehäuseteils 200 angeordnet.

Danach wird das Oberteil 220 des ersten keramischen Gehäuseteils 200 im Verfahrensschritt E mit dem zweiten keramischen Gehäuseteil 300 mittels eines Verbindungsstoffes 500, der zum Beispiel ein Polymer, ein Glas oder einen keramischen Kleber aufweist, verbunden, wobei Bereiche der elektrischen Zuleitungen 4 in den Aussparungen 321 des Fortsatzes 301 des zweiten keramischen Gehäuseteils 300 geführt werden. Anschließend wird der Austrittsbereich 700 mittels einer Abdichtung 900, die ein Polymer aufweist, verschlossen. Alternativ kann die Abdichtung 900 auch ein Glas oder ein keramisches Vergussmaterial aufweisen oder aus einem der genannten Materialien bestehen.

Die in den Figuren gezeigten Ausführungsbeispiele können alternativ oder zusätzlich weitere Merkmale gemäß den Ausführungsformen der allgemeinen Beschreibung aufweisen.

Die Erfindung ist nicht durch die Beschreibung anhand der Ausführungsbeispiele auf diese beschränkt, sondern umfasst jedes neue Merkmal sowie jede Kombination von Merkmalen. Dies beinhaltet insbesondere jede Kombination von Merkmalen in den Patentansprüchen, auch wenn dieses Merkmal oder diese Kombination selbst nicht explizit in den Patentansprüchen oder Ausführungsbeispielen angegeben ist.

### Bezugszeichenliste

- 1: Temperaturfühlerelement
- 2: Sensorelement
- 20: Seitenfläche
- 21: Elektrode
- 3: Sensorelementgehäuse
- 30: Öffnung
- 31: Kavität
- 311: Bodenfläche
- 312: Vertiefung
- 313: Hauptbereich
- 314: Seitentasche
- 32: Vorsprung
- 4: elektrische Zuleitungen
- 5: Metallisierungspaste
- 6: Glasversiegelung
- 100: Temperatursensorsystem
- 200: erstes keramisches Gehäuseteil
- 210: Unterteil
- 211: erste Öffnung
- 212: zweite Öffnung
- 215: erstes unteres Ende
- 216: zweites oberes Ende
- 220: Oberteil
- 221, 321: Aussparung
- 300: zweites keramisches Gehäuseteil
- 301: Fortsatz
- 400: Vergussmaterial
- 500: Verbindungsstoff
- 600: Anschlussleitung
- 700: Austrittsbereich
- 800: Steckverbindung

- 900: Abdichtung
- A, B, C, D, E: Verfahrensschritt

## Patentansprüche

1. Temperatursensorsystem (100), aufweisend
- ein erstes keramisches Gehäuseteil (200), das ein hülsenförmiges Unterteil (210) mit einem ersten, eine erste Öffnung (211) aufweisenden unteren Ende (215) und einem zweiten, eine zweite Öffnung (212) aufweisenden oberen Ende (216) sowie ein mit dem zweiten oberen Ende (216) verbundenes Oberteil (220) aufweist, und
- ein zumindest teilweise im Unterteil (210) angeordnetes Temperaturfühlerelement (1), das ein keramisches Sensorelementgehäuse (3), ein im Sensorelementgehäuse (3) angeordnetes Sensorelement (2) und elektrische Zuleitungen (4) aufweist,
**dadurch gekennzeichnet dass**
- das Sensorelementgehäuse (3) zumindest teilweise in der ersten Öffnung (211) angeordnet ist, und
- das keramische Sensorelementgehäuse (3) eine höhere Wärmeleitfähigkeit als das erste keramische Gehäuseteil (200) aufweist.

2. Temperatursensorsystem nach Anspruch 1,
- wobei das Oberteil (220) Aussparungen (221) aufweist, in dem die elektrischen Zuleitungen (4) des Temperaturfühlerelements (1) zumindest teilweise angeordnet und geführt sind, und
- wobei das Unterteil (210) und das Oberteil (220) einstückig ausgebildet sind.

3. Temperatursensorsystem nach einem der vorhergehenden Ansprüche, wobei das erste keramische Gehäuseteil (200) ein Spritzgussteil ist.

4. Temperatursensorsystem nach einem der vorhergehenden Ansprüche, wobei das erste keramische Gehäuseteil (200) Mullit, Steatit oder Zirkoniumoxid aufweist.

5. Temperatursensorsystem nach einem der vorhergehenden Ansprüche, wobei das keramisches Sensorelementgehäuse (3) Aluminiumoxid, Aluminiumnitrid oder Siliciumcarbid aufweist.

6. Temperatursensorsystem nach einem der vorhergehenden Ansprüche,
- wobei das keramische Sensorelementgehäuse (3) einen umlaufenden Vorsprung (32) aufweist, und
- wobei der Vorsprung (32) mittels einer Klebverbindung formschlüssig mit der zweiten Öffnung (211) verbunden ist.

7. Temperatursensorsystem nach einem der vorhergehenden Ansprüche, aufweisend ein zweites keramisches Gehäuseteil (300), das mit dem Oberteil (220) des ersten keramischen Gehäuseteils (200) verbunden ist und einen Fortsatz (301) mit Aussparungen (321) aufweist, in dem die elektrischen Zuleitungen (4) zumindest teilweise angeordnet und geführt sind.

8. Temperatursensorsystem nach einem der vorhergehenden Ansprüche, wobei das Temperaturfühlerelement (1) mittels eines Vergussmaterials (400) im ersten keramischen Gehäuseteil (200) befestigt ist.

9. Temperatursensorsystem nach einem der vorhergehenden Ansprüche, wobei das Sensorelement (2) ein NTC-Sensorelement ist.

10. Temperatursensorsystem nach einem der vorhergehenden Ansprüche, wobei das Sensorelement (2) eine Perowskitstruktur umfassend die Elemente Y, Ca, Cr, Al, O oder eine Spinellstruktur umfassend die Elemente Ni, Co, Mn, O aufweist.

11. Temperatursensorsystem nach Anspruch 10, wobei das Sensorelement (2) eine Perowskitstruktur mit der Formel (Y₁₋ₓCaₓ)(Cr_{1-y}Al_{y})O₃ mit x = 0,03 bis 0,05 und y = 0,85 aufweist.

12. Temperatursensorsystem nach Anspruch 10, wobei das Sensorelement (2) eine Spinellstruktur mit der Formel Co_{3-(x+y)}NiₓMn_{y}O₄ mit x = 1,32 und y = 1,32 aufweist.

13. Verfahren zur Herstellung eines Temperatursensorsystems (100) gemäß einem der Ansprüche 1 bis 12,
- Bereitstellen des Temperaturfühlerelements (1) sowie des ersten und eines zweiten keramischen Gehäuseteils (200, 300),
- Anordnen des Temperaturfühlerelements (1) im hülsenförmigen Unterteil (210) des ersten keramischen Gehäuseteils (200) derart, dass das Sensorelementgehäuse (3) zumindest teilweise in der zweiten Öffnung (212) angeordnet ist,
- Einbringen von Vergussmaterial (400) in das erste keramische Gehäuseteil (200) derart, dass das Temperaturfühlerelement (1) zumindest teilweise im Vergussmaterial (400) eingebettet ist,
- Anordnen eines Teils der elektrischen Zuleitungen (4) innerhalb Aussparungen (221) des Oberteils (220) des ersten keramischen Gehäuseteils (200), und
- Verbinden des Oberteils (220) des ersten keramischen Gehäuseteils (200) mit dem zweiten keramischen Gehäuseteil (300) mittels eines Verbindungsstoffes (500).

14. Verfahren gemäß Anspruch 13, wobei das Vergussmaterial (400) und der Verbindungsstoff (500) das gleiche Material aufweisen.

15. Verfahren gemäß einem der Ansprüche 13 oder 14,
- wobei die elektrischen Zuleitungen (4) mittels Hartlöten, Crimpen oder Schweißen mit Anschlussleitungen (600) verbunden werden,
- wobei die Anschlussleitungen (600) vor dem Verbinden des Oberteils (220) mit dem zweiten keramischen Gehäuseteil (300) teilweise in den Aussparungen (221) des Oberteils (220) angeordnet werden, und
- wobei die Anschlussleitungen (600) in einem Austrittsbereich (700) aus dem ersten und/oder zweiten keramischen Gehäuseteil (200, 300) mittels eines Polymers oder mittels Glas abgedichtet werden.

## Claims

1. Temperature sensor system (100), comprising
- a first ceramic housing part (200) which has a sleeve-shaped lower part (210) with a first lower end (215) having a first opening (211), and a second upper end (216) having a second opening (212), and an upper part (220) connected to the second upper end (216), and
- a temperature probe element (1) arranged at least in part in the lower part (210) and comprising a ceramic sensor element housing (3), a sensor element (2) arranged in the sensor element housing (3), and electrical feed lines (4),
**characterized in that**
- the sensor element housing (3) is arranged at least in part in the first opening (211), and
- the ceramic sensor element housing (3) has a higher thermal conductivity than the first ceramic housing part (200).

2. Temperature sensor system according to Claim 1,
- wherein the upper part (220) comprises recesses (221), in which the electrical feed lines (4) of the temperature probe element (1) are arranged and guided at least in part, and
- wherein the lower part (210) and the upper part (220) are formed in one piece.

3. Temperature sensor system according to one of the preceding claims, wherein the first ceramic housing part (200) is an injection-molded part.

4. Temperature sensor system according to one of the preceding claims, wherein the first ceramic housing part (200) comprises mullite, steatite or zirconium oxide.

5. Temperature sensor system according to one of the preceding claims, wherein the ceramic sensor element housing (3) comprises aluminum oxide, aluminum nitride or silicon carbide.

6. Temperature sensor system according to one of the preceding claims,
- wherein the ceramic sensor element housing (3) comprises a peripheral protrusion (32), and
- wherein the protrusion (32) is connected to the second opening (211) in a form-fitting manner by means of an adhesive bond.

7. Temperature sensor system according to one of the preceding claims, comprising a second ceramic housing part (300), which is connected to the upper part (220) of the first ceramic housing part (200) and which comprises an extension (301) with recesses (321), in which the electrical feed lines (4) are arranged and guided at least in part.

8. Temperature sensor system according to one of the preceding claims, wherein the temperature probe element (1) is fixed in the first ceramic housing part (200) by means of a potting material (400).

9. Temperature sensor system according to one of the preceding claims, wherein the sensor element (2) is an NTC sensor element.

10. Temperature sensor system according to one of the preceding claims, wherein the sensor element (2) has a perovskite structure comprising the elements Y, Ca, Cr, Al, O or has a spinel structure comprising the elements Ni, Co, Mn, O.

11. Temperature sensor system according to Claim 10, wherein the sensor element (2) has a perovskite structure with the formula (Y₁₋ₓCaₓ)(Cr_{1-y}Al_{y})O₃ with x = 0.03 to 0.05 and y = 0.85.

12. Temperature sensor system according to Claim 10, wherein the sensor element (2) has a spinel structure with the formula Co_{3-(x+y)}NiₓMn_{y}O₄ with x = 1.32 and y = 1.32.

13. Method for producing a temperature sensor system (100) according to one of Claims 1 to 12,
- providing the temperature probe element (1) and also the first and a second ceramic housing part (200, 300),
- arranging the temperature probe element (1) in the sleeve-shaped lower part (210) of the first ceramic housing part (200) in such a manner that the sensor element housing (3) is arranged at least in part in the second opening (212),
- introducing potting material (400) into the first ceramic housing part (200) in such a manner that the temperature probe element (1) is encased at least in part in the potting material (400),
- arranging part of the electrical feed lines (4) within recesses (221) of the upper part (220) of the first ceramic housing part (200), and
- connecting the upper part (220) of the first ceramic housing part (200) to the second ceramic housing part (300) by means of a connecting substance (500).

14. Method according to Claim 13, wherein the potting material (400) and the connecting substance (500) comprise the same material.

15. Method according to one of Claims 13 or 14,
- wherein the electrical feed lines (4) are connected by means of hard soldering, crimping or welding to connection lines (600),
- wherein the connection lines (600) are arranged partly in the recesses (221) of the upper part (220) prior to the connection of the upper part (220) to the second ceramic housing part (300), and
- wherein the connection lines (600) are sealed by means of a polymer or by means of glass in an outlet region (700) from the first and/or second ceramic housing part (200, 300).

## Revendications

1. Système capteur de température (100), comprenant :
- une première partie de boîtier en céramique (200), qui comprend une partie inférieure en forme de gaine (210), comprenant une première extrémité inférieure (215) qui comprend une première ouverture (211), et une seconde extrémité supérieure (216) qui comprend une seconde ouverture (212), ainsi qu'une partie supérieure (220) reliée avec la seconde extrémité supérieure (216), et
- un élément capteur de température (1) agencé au moins en partie dans la partie inférieure (210), qui comprend un boîtier d'élément capteur en céramique (3), un élément capteur (2) agencé dans le boîtier d'élément capteur (3) et des conduites électriques (4), **caractérisé en ce que**
- le boîtier d'élément capteur (3) est agencé au moins en partie dans la première ouverture (211), et
- le boîtier d'élément capteur en céramique (3) présente une conductivité thermique plus élevée que la première partie de boîtier en céramique (200).

2. Système capteur de température selon la revendication 1,
- dans lequel la partie supérieure (220) comprend des évidements (221), dans lesquels les conduites électriques (4) de l'élément capteur de température (1) sont au moins en partie agencées et guidées, et
- dans lequel la partie inférieure (210) et la partie supérieure (220) sont configurées d'un seul tenant.

3. Système capteur de température selon l'une quelconque des revendications précédentes, dans lequel la première partie de boîtier en céramique (200) est une partie moulée par injection.

4. Système capteur de température selon l'une quelconque des revendications précédentes, dans lequel la première partie de boîtier en céramique (200) comprend de la mullite, de la stéatite ou de l'oxyde de zirconium.

5. Système capteur de température selon l'une quelconque des revendications précédentes, dans lequel le boîtier d'élément capteur en céramique (3) comprend de l'oxyde d'aluminium, du nitrure d'aluminium ou du carbure de silicium.

6. Système capteur de température selon l'une quelconque des revendications précédentes,
- dans lequel le boîtier d'élément capteur en céramique (3) comprend une avancée périphérique (32), et
- dans lequel l'avancée (32) est reliée avec la seconde ouverture (211) par complémentarité de forme au moyen d'une liaison collée.

7. Système capteur de température selon l'une quelconque des revendications précédentes, comprenant une seconde partie de boîtier en céramique (300), qui est reliée avec la partie supérieure (220) de la première partie de boîtier en céramique (200) et comprend un prolongement (301) muni d'évidements (321), dans lesquels les conduites électriques (4) sont au moins partiellement agencées et guidées.

8. Système capteur de température selon l'une quelconque des revendications précédentes, dans lequel l'élément capteur de température (1) est fixé dans la première partie de boîtier en céramique (200) au moyen d'un matériau de scellement (400).

9. Système capteur de température selon l'une quelconque des revendications précédentes, dans lequel l'élément capteur (2) est un élément capteur NTC.

10. Système capteur de température selon l'une quelconque des revendications précédentes, dans lequel l'élément capteur (2) comprend une structure pérovskite comprenant les éléments Y, Ca, Cr, Al, O ou une structure spinelle comprenant les éléments Ni, Co, Mn, O.

11. Système capteur de température selon la revendication 10, dans lequel l'élément capteur (2) comprend une structure pérovskite de formule (Y₁₋ₓCaₓ)(Cr_{1-y}Al_{y})O₃ avec x = 0,03 à 0,05 et y = 0,85.

12. Système capteur de température selon la revendication 10, dans lequel l'élément capteur (2) comprend une structure spinelle de formule Co_{3-(x+y)}NiₓMn_{y}O₄ avec x = 1,32 et y = 1,32.

13. Procédé de fabrication d'un système capteur de température (100) selon l'une quelconque des revendications 1 à 12, comprenant :
- la préparation de l'élément capteur de température (1), ainsi que de la première et d'une seconde partie de boîtier en céramique (200, 300),
- l'agencement de l'élément capteur de température (1) dans la partie inférieure en forme de gaine (210) de la première partie de boîtier en céramique (200), de sorte que le boîtier de l'élément capteur (3) soit agencé au moins en partie dans la seconde ouverture (212),
- l'introduction d'un matériau de scellement (400) dans la première partie de boîtier en céramique (200), de sorte que l'élément capteur de température (1) soit incorporé au moins en partie dans le matériau de scellement (400),
- l'agencement d'une partie des conduites électriques (4) dans des évidements (221) de la partie supérieure (220) de la première partie de boîtier en céramique (200), et
- la liaison de la partie supérieure (220) de la première partie de boîtier en céramique (200) avec la seconde partie de boîtier en céramique (300) au moyen d'une matière de liaison (500).

14. Procédé selon la revendication 13, dans lequel le matériau de scellement (400) et la matière de liaison (500) comprennent le même matériau.

15. Procédé selon l'une quelconque des revendications 13 ou 14,
- dans lequel les conduites électriques (4) sont reliées avec des conduites de connexion (600) par brasage fort, sertissage ou soudage,
- dans lequel les conduites de connexion (600) sont agencées en partie dans les évidements (221) de la partie supérieure (220) avant la liaison de la partie supérieure (220) avec la seconde partie de boîtier en céramique (300), et
- dans lequel les conduites de connexion (600) sont étanchéifiées dans une zone de sortie (700) de la première et/ou seconde partie de boîtier en céramique (200, 300) au moyen d'un polymère ou au moyen de verre.
